## Europäisches Patentamt

## European Patent Office

## Office européen des brevets

(11) Veröffentlichungsnummer: **0 318 732**

**A2**

(12) # EUROPÄISCHE PATENTANMELDUNG

(21) Anmeldenummer: **88118625.8**

(22) Anmeldetag: **09.11.88**

(51) Int. Cl.⁴: **B30B 9/04 , B30B 15/30**

(30) Priorität: **28.11.87 DE 3740399**
**01.10.88 DE 3833391**

(43) Veröffentlichungstag der Anmeldung:
**07.06.89 Patentblatt 89/23**

(84) Benannte Vertragsstaaten:
**DE FR GB IT**

(71) Anmelder: **Klöckner-Humboldt-Deutz Aktiengesellschaft Deutz-Mülheimer-Strasse 111 Postfach 80 05 09 D-5000 Köln 80(DE)**

(72) Erfinder: **Schotten, Alfons An den Eichen 9 D-5168 Nideggen-Rath(DE)**
Erfinder: **Soumagne, Hans Hiltroper Strasse 90 D-4630 Bochum 1(DE)**
Erfinder: **Husel, Sieglinde Am krausen Bäumchen 101 D-4300 Essen(DE)**

(74) Vertreter: **Beisner, Klaus, Dipl.-Ing. et al c/o KHD Humboldt Wedag AG Patente und Lizenzen Wiersbergstrasse Postfach 91 04 57 D-5000 Köln 91(DE)**

(54) **Vorrichtung zum Auspressen von Flüssigkeit aus schütt- und/oder rieselfähigem Gut.**

(57) Bei einer Vorrichtung zum Auspressen von Flüssigkeit aus schütt- und/oder rieselfähigem Gut mit einer Anzahl in Reihe horizontal angeordneter und zwischen vertikalen Preßwänden ausgebildeter Preßkammern, wobei jeder Preßkammer ein relativ zu ihr axial verschiebarer Kammerring zugeordnet und mit Antriebs- und Führungsmitteln von einer die Preßkammer verschließenden Position zu einer die Preßkammer öffnenden Position und umgekehrt verschiebbar ist und jeder Preßkammer bzw. deren Kammerring eine Einfüllöffnung mit Mitteln zum Öffnen und Verschließen sowie eine Beschickungseinrichtung zugeordnet ist und zumindest zwischen jeweils zwei Preßkammern jeweils zwei Preßwände im parallelen Abstand mit einem Zylindermantel zu einem den Druck von Preßkammer zu Preßkammer übertragenden Stützring verbunden sind, wird vorgeschlagen, daß die Beschickungseinrichtung (100) eine der Anzahl der Preßkammern (1) entsprechende Anzahl von Chargierbehältern (15) aufweist, wobei jeder Preßkammer (1) ein separater Chargierbehälter (15) zugeordnet ist, und jeder Chargierbehälter (15) Mittel zur Dosierung und Zuteilung von jeweils einer dem Aufnahmevolumen der zugeordneten Preßkammer (1) entsprechenden Gutcharge aufweist.

FIG.1

### Vorrichtung zum Auspressen von Flüssigkeit aus schütt- und/oder rieselfähigem Gut

Die Erfindung betrifft eine Vorrichtung zum Auspressen von Flüssigkeit aus schütt- und/oder rieselfähigem Gut mit einer Anzahl in Reihe horizontal angeordneter und zwischen vertikalen Presswänden ausgebildeter Preßkammern, wobei jeder Preßkammer ein relativ zu ihr axial verschiebbarer Kammerring zugeordnet und mit Antriebs- und Führungsmitteln von einer die Preßkammer verschließenden Position zu einer die Preßkammer öffnenden Position und umgekehrt verschiebbar ist und jeder Preßkammer bzw. deren Kammerring eine Einfüllöffnung mit Mitteln zum Öffnen und Verschließen sowie eine Beschickungseinrichtung zugeordnet ist und zumindest zwischen jeweils zwei Preßkammern jeweils zwei Preßwände im parallelen Abstand mit einem Zylindermantel zu einem den Druck von Preßkammer zu Preßkammer übertragenden Stützring verbunden sind.

Der Anfall großer Mengen von flüssigen bzw. Flüssigkeit enthaltenden Abfallstoffen wie Klärwerksschlämme, Industrieschlämme oder Hafenschlick zwingt Länder und Gemeinden zu großen Entsorgungsanstrengungen nach Maßgabe von ständig verschärften Vorschriften und Gesetzen zur Umweltschonung. Dabei müssen solche Schlämme zumindest sehr weitgehend entwässert werden.

Das Erfordernis zu solcher Entwässerung entspricht beispielsweise den für die Zulassung zur Deponierung entsprechenden Anforderungen an Mindest-Feststoffgehalte zur Erzielung einer genügenden bodenmechanischen Festigkeit. Auch im Falle der Verwendung als Brennmaterial ist zumindest eine sehr weitgehende Entwässerung der Abfallstoffe erforderlich.

Beim Fehlen geeigneter Verfahren oder Vorrichtungen zur Erzielung einer ausreichenden Entwässerung von Schlamm wird häufig als Ausweg das Hinzufügen von trockenen Zuschlagstoffen praktiziert. Eine solche Maßnahme erfordert nachteilig erhebliche Kosten für Materialbeschaffung und Transport sowie maschinellen Einsatz und Energie zur Vermischung von Schlamm und Zuschlagstoffen.

Ein weiterer Ausweg, beispielsweise die Verarbeitung von Schlämmen mit Hausmüll zu humusähnlichem Kompost, scheitert vielfach am Schwermetallgehalt der Schlämme oder auch an den Transportkosten zur Verteilung auf geeigneten Landbauflächen und schließlich an Problemen und Kosten der Zwischenlagerung.

Andere bekannte Verfahren wie beispielsweise die thermische Trocknung .. cks Schlammverbrennung sind ebenfalls unwi...chaftlich und damit nachteilig wegen des erforderlichen Aufwandes an zusätzlichen Energieträgern sowie Verfügbarkeit von geeigneten Trockenvorrichtungen.

Auch hat sich bei der Verbrennung von Schlamm zusammen mit Müll z. B. in Müllverbrennungsanlagen der Nachteil herausgestellt, daß das Brennmaterial infolge vergleichsweise hohen Gehaltes an Restfeuchte die Bildung von Schwel nestern begünstigt, welche dann zu unvollständiger Verbrennung und damit zu weiteren Emissionsproblemen führen.

Zur Lösung des Schlammentwässerungsproblems wurde bereits mit der europäischen Patentschrift 0 092 146 vorgeschlagen, eine Verbesserung dadurch zu erreichen, daß der Schlamm zunächst durch Dekantieren bzw. Zentrifugieren einer Teilentwässerung unterzogen und der dabei gewonnene teilentwässerte Feststoff zu kleinen Formkörpern zerteilt wird, worauf diese mit einem Drainagematerial in Form eines trockenen Pulvers umhüllt und anschließend chargenweise verdichtet werden, wobei Flüssigkeit aus der Masse der umhüllten Formkörper ausgepreßt wird.

Dabei entsteht ein sehr fester, von Drainageschichten durchsetzter Preßling. Diese Drainageschichten ermöglich es der aus den einzelnen Formkörpern auszupressenden Flüssigkeit, mit vergleichsweise niedrigem Strömungswiderstand von einer Drainageschicht zur anderen fließend, aus dem Kollektiv der Formkörper des Preßlings auszutreten.

Es handelt sich hierbei um ein mechanisches Entwässerungsverfahren, welches zu einer wirtschaftlichen Reduzierung an Masse und Volumen des den Preßling bildenden Feststoffes führt. Der so gewonnene Feststoff stellt ein problemlos zu deponierendes Produkt dar. Der vergleichsweise niedrige Gehalt an Restfeuchtigkeit ermöglicht problemlos sowohl dessen Verbrennung als auch Deponierung. Falls dieser Feststoff frei von Schwermetallen oder anderen giftigen Stoffen ist, eignet er sich auch als erdähnliches, nach Zerkleinerung rieselfähiges Schüttgut zur landwirtschaftlichen Nutzung beispielsweise in einem Kompostierungsmaterial.

Wichtige Voraussetzung zur qualitativen Durchführung des bekannten Verfahrens ist eine schonende Behandlung des aus einzelnen mit Drainagematerial umhüllten Pellets bestehenden schüttfähigen Gutes beim Chargieren von Preßkammern einer Preßvorrichtung.

Für einen guten Entwässerungseffekt beim Auspressen der Flüssigkeit aus einer Charge ist es dabei wichtig, daß das Gut in der Preßkammer mit vergleichsweise geringer Schichtdicke vorliegt, um der auszupressenden Flüssigkeit möglichst kurze Austrittswege zu geben und dadurch dem Flüssigkeitsaustritt entgegenwirkende Strömungswiderstände so niedrig wie möglich zu halten.

Bei der Durchführung des vorgennanten Verfahrens in einer Preßvorrichtung können sich beim Ausstoßen des verdichteten Preßlings Schwierigkeiten ergeben, wenn die vergleichsweise sehr feste Masse des Preßkuchens von den Filterflächen losgelöst und aus der Vorrichtung entfernt werden muß.

Dabei müssen dann auch die Filterflächen der Preßkammern zumindest nach jeweils einigen Arbeitstakten intensiv abgereinigt werden, um Verstopfungen des Filtermaterials bzw. der Ablaufkanäle für die Flüssigkeit zu vermeiden.

Aus der europäischen Patentanmeldung 0 019 976 ist ein Verfahren zum Entwässern von Klärschlämmen auf Kammerfilterpressen bekannt. Es handelt sich um Klärschlämme, deren Entwässerungsverhalten durch Zugabe von organischen Flockungsmitteln verbessert worden ist, auf einer Kammerfilterpresse, wobei die Hauptmenge des Wassers der geflockten Schlämme in einem der Kammer-Filterpresse vorgeschalteten Verfahrensschritt durch Schwerkraftfiltration ohne Anlegen einer Druckdifferenz abgetrennt und erst dann die eigentliche Druckfiltration auf der Kammer-Filterpresse vorgenommen wird.

Dabei sollen die Klärschlämme nach Zugabe der Flockungsmittellösung zur Verbesserung ihres Entwässerungsverhaltens noch 0,5 bis 5 Minuten, insbesondere 1 bis 3 Minuten, in einem Behälter, gegebenenfalls unter Rühren verweilen, bis sie dem ersten Entwässerungsschritt unterworfen werden. Als Entwässerungsvorrichtung in der ersten Entwässerungsstufe werden kontinuierlich arbeitende Siebtrommeln mit oberflächenerneuernden Einbauten verwendet. Der Schlamm wird in einer Schichtdicke im Bereich von 15 bis 30 mm den Filterkammern einer Kammer-Filterpresse aufgegeben und ausgepreßt.

Vorzugsweise sollen die Klärschlämme auch noch mit Kohleschlämmen oder Klarschlammaschen homogen vermischt werden, bevor die Flockung und die zweistufige Entwässerung erfolgt.

Nachteilig beim bekannten Verfahren ist das Erfordernis einer Zugabe von Flockungsmitteln und deren Einarbeitung in den Schlamm sowie die Homogenisierung mit weiterem Feststoff in Rührbehältern, und weiterhin die Empfindlichkeit dieser Flockungsmittel gegen die Anwendung von Preßdrücken.

Infolgedessen muß die Entwässerung bei sehr geringen Schichtdicken des Aufgabegutes in der Filterkammer im Bereich von 15 bis 30 mm mit vergleichsweise niedrigen Drücken, z. B. von max. 15 bar vorgenommen werden. Dabei beträgt dann die Filtrierzeit gemäß Beispiel 1 ca. 90 Minuten, gemäß Vergleichsbeispiel 1 ca. 120 Minuten, gemäß Beispiel 2 ca. 80 Minuten und gemäß Beispiel 3 ca. 100 Minuten.

Derart lange Entwässerungszeiten in einer Kammer-Filterpresse sind äußerst unwirtschaftlich und folglich zur Durchführung einer wirtschaftlichen Entwässerung bei größeren Mengen von flüssigkeitshaltigen Abfällen ungeeignet.

Entsprechendes gilt auch für ein aus der DE-OS 15 84 982 bekanntes Verfahren zum Auspressen von Flüssigkeit aus Abwasserschlämmen, wobei das auszupressende Gut in einer Presse während mehrerer Preßstufen einem Preßdruck mit dazwischenliegenden Entspannungsintervallen ausgesetzt wird.

Aus "Ullmanns Enzyklopädie der technischen Chemie" 4. neubearbeitete und erweitere Auflage, Band 2, Verfahrenstechnik I (Grundoperationen), Verlag Chemie, Weinheim/Bergstraße, Seiten 199 bis 203, sind im Kapitel "Abpressen von Flüssigkeiten" Mechanismen, Anwendung und Grundlagen sowie Vorrichtungen zur mechanischen Entwässerung von Schlämmen bekannt.

Darin ist auf Seite 199 linke Spalte, zweiter Absatz, dargelegt, daß es in der Regel vorteilhaft ist, die Verdichtung mit dem Preßkolben nicht zu schnell fortschreiten zu lassen, damit die Flüssigkeit sich nicht staut und die für den Abfluß notwendigen Kanäle blockiert. Langsamer Druckanstieg hat nach dieser Lehre außerdem den Vorteil, daß die abfließende Flüssigkeit keine Feststoffteilchen mitreißt, die Verstopfungsgefahr daher verringert ist und klare Flüssigkeit erhalten wird. Das abzupressende Feuchtgut muß in nennenswertem Umfang in sich deformierbar sein und beim Verdichten flüssigkeitsdurchlässig bleiben.

Gemäß Seite 199, rechte Spalte, Ziffer c) eignen sich zum Abpressen von Flüssigkeiten Schüttungen (Haufwerke), deren Teilchen lockere und elastische Schlämme bilden, z. B. chemische Produkte, Abwasserschlämme.

Hierfür geeignet erweisen sich gemäß Seite 201, linke Spalte, unterer Absatz, sogenannte Kachelpressen, auch Trog-, Ring- Schachtelpressen genannt. Bei ihnen schieben sich Preßkästen, in denen sich das Preßgut befindet, beim Pressen schachtelartig ineinander.

Eine dieser Gattung entsprechende Presse ist aus der deutschen Patentschrift Nr. 290718 bekannt. Es handelt sich gemäß Hauptanspruch um eine hydraulische Kakao-Presse liegender Anordnung mit aus ringförmigen Hohlkörpern und Preß stempeln nach Art der bekannten Topfpresse gebildeten Elementen, wobei die Preßstempel in ihrer Länge so bemessen sind, daß sie nach vollzogener Pressung und Fe...legu..., der Hohlkörper die Preßkuchen aus den ...ohlkö...ern ausstoßen können.

Der Erfindung liegt die Aufgabe zugrunde, eine Vorrichtung zum Auspressen von Flüssigkeit aus Schlammteilchen einer der Gattung von Kachelpressen zuzuordnenden Art derart weiter auszubilden sowie bezüglich ihrer mittel und Arbeitsweise für eine wirtschaftliche und schnelle Taktfolge in besonderer Weise so auszugestalten und zu verbessern, daß diese sich zur wirtschaftlichen Durchführung des Entwässerungsverfahren gemäß der europäischen Patentschrift 0 092 146 von schütt- und/oder rieselfähigem Gut eignet, wobei sich dieses Gut aus einem Kollektiv von einzelnen mit Drainagematerial umhüllten Formkörpern zusammensetzt.

Dabei soll die Presse das Auspressen von Flüssigkeit aus Gutchargen mit vergleichsweise wesentlich größen Schichtdicken, in vergleichsweise erheblich kürzerer Entwässerungszeit, und mit vergleichsweise erheblich höheren Drücken ermöglichen, und somit insgesamt eine wirtschaftliche Entwässerung voreingedickter Schlämme mit im Verhältnis zum maschinellen Aufwand vergleichsweise hohen Durchsätzen ermöglichen.

Die Aufgabe wird bei einer Vorrichtung zum Auspressen von Flüssigkeit der eingangs genannten Art mit der Erfindung dadurch gelöst, daß die Beschickungseinrichtung der Presse eine der Anzahl der Preßkammern entsprechende Anzahl von Chargierbehältern aufweist, wobei jeder Preßkammer ein separater Chargierbehälter zugeordnet ist, und jeder Chargierbehälter Mittel zur Dosierung und Zuteilung von jeweils einer dem Aufnahmevolumen der zugeordneten Preßkammer entsprechenden Gutcharge aufweist.

Mit großem Vorteil eignet sich die Vorrichtung nach der Erfindung zur Durchführung des vorgenannten Verfahrens insbesondere gemäß der europäischen Patentschrift 0 092 146 zum Auspressen von Flüssigkeit aus vorentwässerten und mit einer Drainageschicht umhüllten schütt- und/oder rieselfähigen Schlammpartikeln, weil durch die in besonderer Weise ausgebildete Beschickkungseinrichtung mit jeweils einem jeder Preßkammer zugeordnetem Chargierbehälter erreicht wird, daß sämtliche Preßkammern beim Füllvorgang mit einer vorabgemessenen und exakt dosierten Charge gleichmäßig und vollständig gefüllt werden.

Dies ist wichtig, um beim Einleiten des Preßvorganges eine Einwirkung von Scherkräften auf die Schüttgutcharge zu vermeiden. Solche Scherkräfte, wie sie bei einer unvollständigen Füllung einer Preßkammer auftreten, würden zu einer Zerstörung oder Unterbrechung der Drainageschichten an den Teilchen führen und damit das Ergebnis der Ent- wässerung verschlechtern.

Mit der erfindungsgemäßen Ausgestaltung der Beschickungseinrichtung der Presse ergibt sich der weitere Vorteil einer vergleichsweise sehr schnellen Beschickung einer jeden Preßkammer mit der im zugeordneten Chargeierbehälter exakt vordosierten Charge.

Damit wird vorteilhaft eine vergleichsweise schnelle Folge von Arbeitstakten beim Preßvorgang und somit eine quasi - kontinuierliche Betriebsweise mit einer vergleichsweise großen spezifischen Leistung erreicht.

Der optimale Entwässerungseffekt in Verbindung mit einer großen spezifischen Leistung der Presse führen zu einem wirtschaftlich vorteilhaften Arbeitsergebnis bei der Entwässerung großer Mengen am Schlamm.

Eine Ausgestaltung sieht vor, daß den Chargierbehältern eine Zuteileinrichtung vorzugsweise mit einem Transportband und einer verfahrbaren Abwurfschurr zugeordnet ist und diese zur Überprüfung des Materialpegels in dem jeweils zur Materialaufgabe anstehenden Chargierbehälter eine Einrichtung wie Ultraschall-Pegelmesser aufweist, welche Einrichtung mit Mitteln zur Unterbrechung der Gutzuteilung zum Chargierbehälter zusammenwirkend ausgebildet ist.

Mit Vorteil ist weiter vorgesehen, daß jeder Chargierbehälter zur gravimetrischen Dosierung seines Inhalts mit wenigstens einem Lastgeber ausgerüstet ist.

Um die Preßkammern zum periodischen Abreinigung der Filterflächen und/oder zur Inspektion bzw. zum Austausch von Filtertüchern von oben her zugänglich zu machen, ist in einer weiteren Ausgestaltung vorgesehen, daß die Chargierbehälter gemeinsam auf einem Rahmengestell angeordnet sind und das Rahmengestell mit Fahrmitteln versehen von einer Position oberhalb der Presse zu einer Seitenposition neben derselben auf einem Paar oberhalb der Presse und zu dieser quer verlaufenden Schienen bzw. Trägern verfahrbar ausgebildet ist.

Mit Vorteil sieht eine weitere Ausgestaltung vor, wobei die Vorrichtung eine Wascheinrichtung zur Abreinigung der Filterflächen der Preßkammer aufweist, daß diese Wascheinrichtung auf einem seitlich neben und oberhalb der Preßkammern längsverfahren Waschwagen angeordnet ist und der Waschwagen Mittel zur Verriegelung jeweils neben einer der Preßkammern aufweist.

Damit kann dann, nachdem die Chargierbehälter mit dem Rahmengestell zur Seitenposition neben der Presse verfahren sind, die Wascheinrichtung in Aktion treten und, neben den Preßkammern von Kammer zu Kammer fahrend, diese in schneller Folge abreinigen.

Um die Bauhöhe der Wascheinrichtung zu begrenzen und damit eine kompakte, gedrungene Bauweise der gesamten Maschinenanlage ermöglichen zu können, sieht eine weitere Ausgestaltung vor, daß die Wascheinrichtung einen mit einem Schwenkantrieb ausgebildeten Schwenkrahmen mit einem Sprühkopf aufweist. Dieser kann zwecks Verringerung der Bauhöhe während der Position der Chargierbehälter mit dem Rahmengestell oberhalb der Presse in die horizontale Lage umgeschwenkt werden.

Dabei sieht eine weitere Ausgestaltung der Wascheinrichtung mit Vorteil vor, daß der Sprühkopf am Ende eines längs- und schwenkbeweglich geführten Sprührohres angeordnet ist, welches an seinem dem Sprühkopf entgegengesetzten Ende mit einer Kurbelschleife mit Drehantrieb zusammenwirkt.

Mit Vorteil ist diese Anordnung so getroffen, daß bei Drehbewegung der Kurbelschleife der Sprühkopf innerhalb einer geöffneten Preßkammer eine Bahnbewegung in Form einer Herzkurve abfährt und dabei alle Bereiche der beiden Filterflächen einer Preßkammer mit den Sprühdüsen erreicht.

Eine sehr vorteilhafte Ausgestaltung der Presse sieht vor, daß die Stützringe in seitlichen oberen Führungen der Presse an Rollen hängend verschiebbar geführt und deren Zylindermäntel als Führungen für die Kammerringe ausgebildet sind.

Durch die hängende Führung der schwergewichtigen Stützringe ergibt sich eine tiefe Schwerpunktslage und damit eine äußerst stabile Führung dieser Stützringe.

Eine Ausgestaltung sieht weiter vor, daß die Kammerringe auf Führungen in mittlerer Höhe der Presse unter Gewichtsentlastung gegenüber den Stützringen verschiebbar geführt sind.

Durch die gegenseitige Gewichtsentlastung wird eine vorteilhafte Leichtgängigkeit bei der Relativbewegung zwischen einem Kammerring und einem Stützring erreicht, und weiterhin wird Verschleiß an den Führungslfächen vermieden. Weitere vorteilhafte Ausgestaltungen der Vorrichtung sind entsprechend den Merkmalen der Ansprüche 10 bis 13 vorgesehen.

Die Erfindung wird in schematischen Zeichnungen in einer bevorzugten Ausführungsform gezeigt, wobei aus den Zeichnungen weitere vorteilhafte Einzelheiten der Erfindung entnehmbar sind.

Die Zeichnungen zeigen im einzelnen:

Fig. 1 eine Seitenansicht der Vorrichtung;

Fig. 2 eine Frontansicht der Vorrichtung gemäß Fig. 1, teilweise im Schnitt;

Fig. 3 eine Seitenansicht eines Teils der Vorrichtung mit der Wascheinrichtung in Arbeitsstellung während der Abreinigung einer geöffneten Preßkammer;

Fig. 4 eine Ansicht der Wascheinrichtung in Arbeitsstellung bei der Abreinigung einer Preßkammer-Filterfläche, in Richtung der Längsachse der Vorrichtung gesehen;

Fig. 5a eine Frontansicht eines Stützringes, in oberen Führungen hängend;

Fig. 5b eine Draufsicht auf den Stützring gemäß Fig. 5a;

Fig. 6 eine Seitenansicht zweier Stützringe mit einem dazwischengeführten Kammerring;

Fig. 7a eine Frontansicht eines Kammerringes mit einer Füllöffnung zur Materialaufgabe sowie mit Mitteln zum Öffnen und Schließen der Füllöffnung;

Fig. 7b den Kammerring gemäß Fig. 7a im Schnitt entsprechend der Schnittebene VII-VII in Fig. 7a;

Fig. 7c eine Draufsicht auf den Kammerring;

Fig. 8 einen Längsschnitt einer Folge von in horizontaler Reihe angeordneter Preßkammern mit Kammerringen, in rein schematischer Darstellung im Schnitt einer vertikalen, in axialer Richtung der Vorrichtung verlaufenden Ebene.

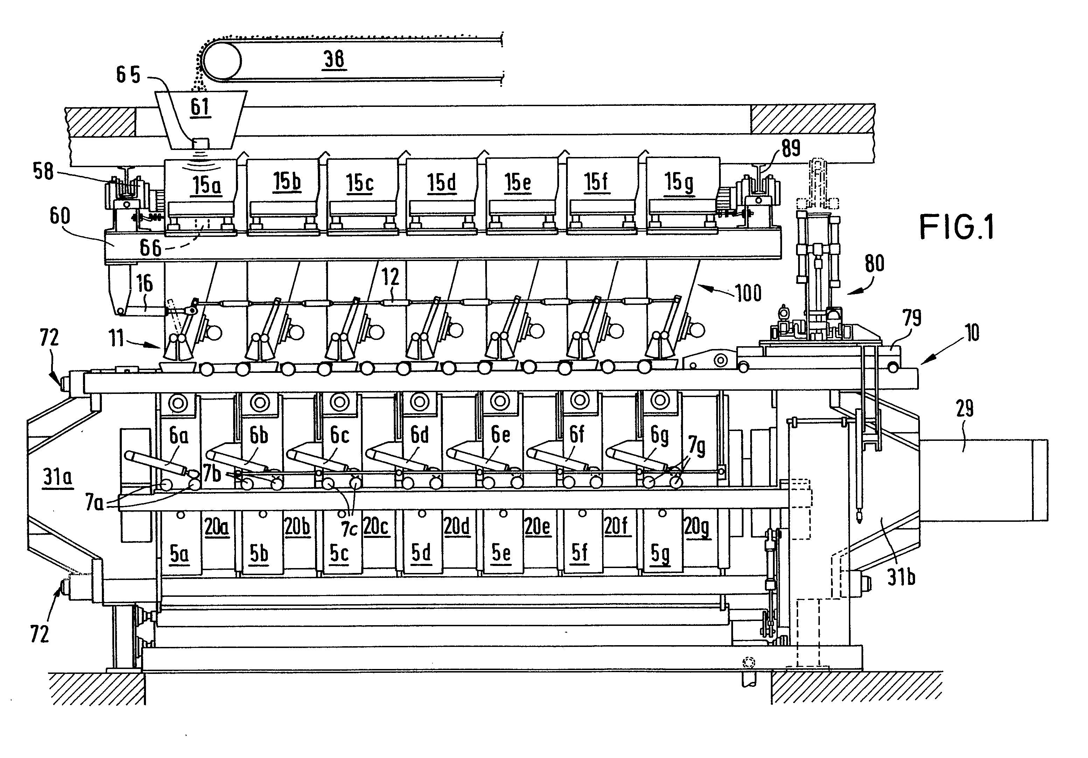

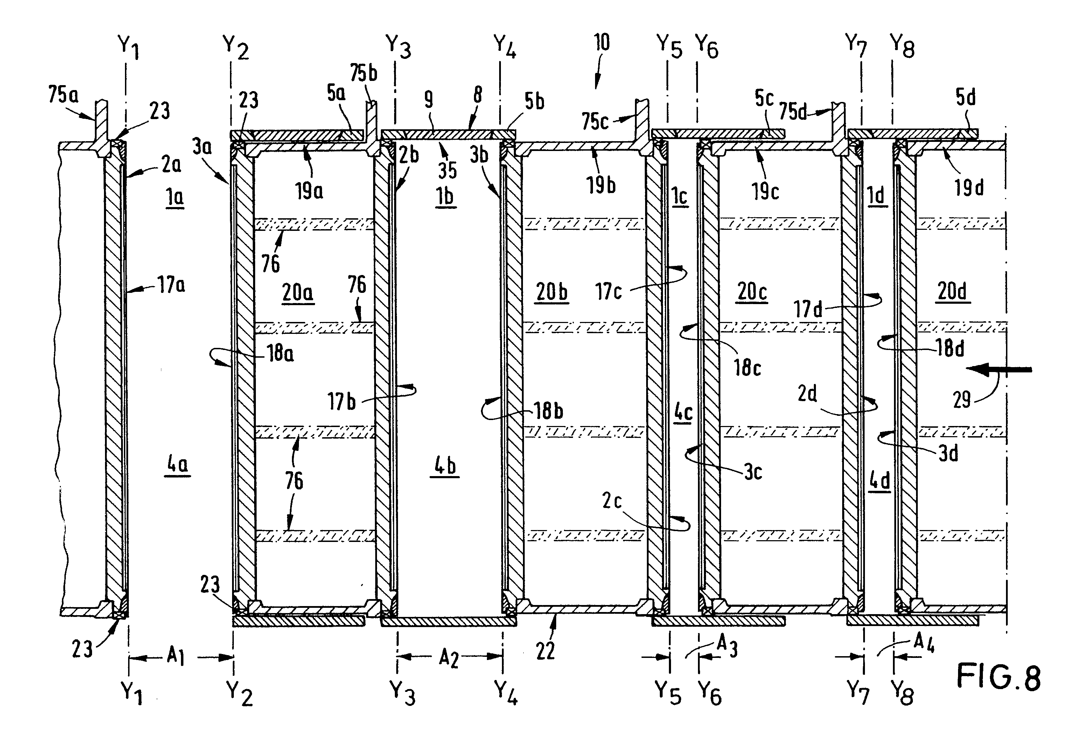

Die aus der Zusammenschau der Figuren 1 und 8 ersichtliche Vorrichtung (10) zum Auspressen von Flüssigkeit aus schütt- und/oder rieselfähigem Gut weist eine Anzahl in Reihe horizontal nebeneinander angeordnete Preßkammern (1a, 1b, 1c, 1d usw.) auf.

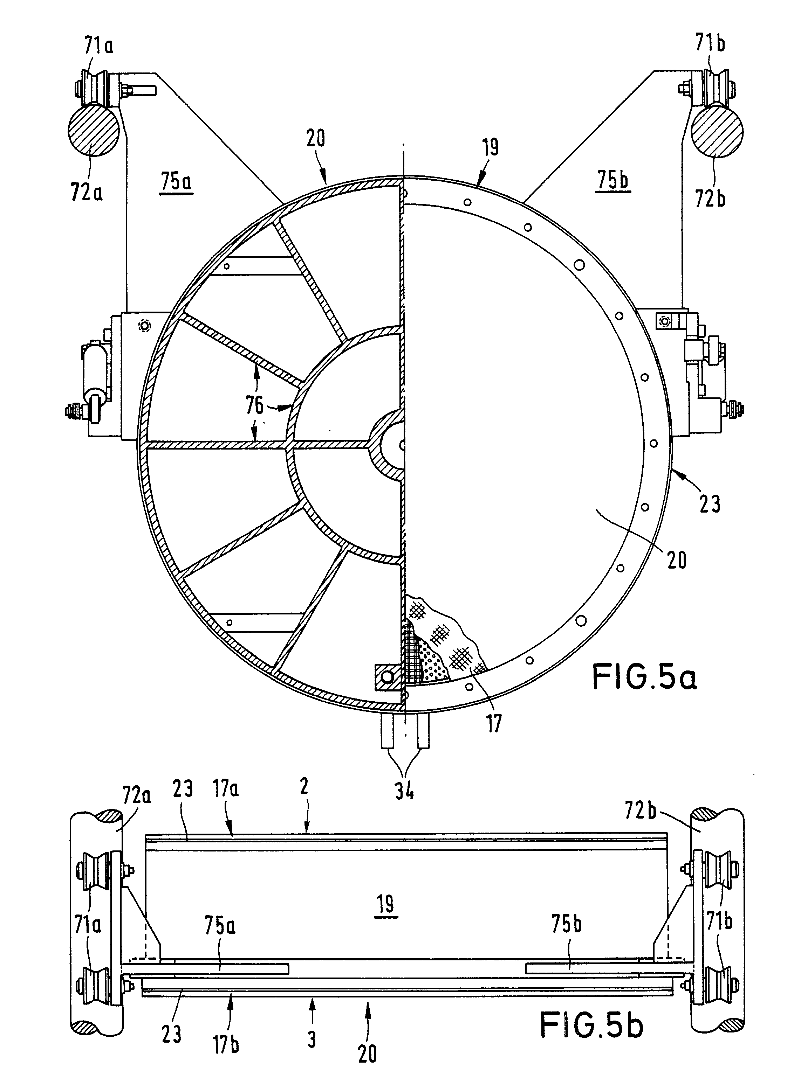

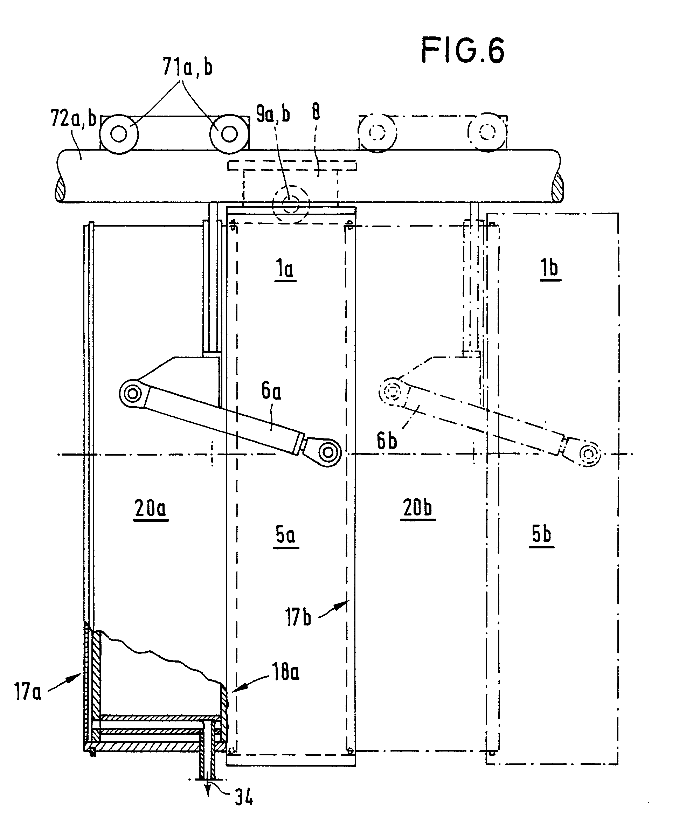

Aus der Fig. 8 ist erkennbar, daß diese Preßkammern (1a bis 1d usw.) zwischen vertikalen Preßwänden (2a, 3a; 2b, 3b; 2c, 3c; 2d, 3d usw.) ausgebildet sind. Weiterhin sind die Preßwände (2, 3) an ihren Oberflächen (17a, 18a; 17b, 18b; 17c, 18c; 17d, 18d usw.) mit einer besonderen Struktur als Filterelemente ausgebildet. Vorteilhaft kann diese Struktur so aufgebaut sein, daß auf der glatten Oberfläche (17, 18) zunächst ein Drahtgitter und auf diesem ein Lochblech aufgelegt und dieses mit einem Filtertuch überspannt ist, wie dies beispielhaft in der Fig. 5a, unten rechts, angedeutet ist. Diese Filterstruktur (17) steht mit einem Filtratablauf (34) in Verbindung, wie dies aus den Figuren 5a und 6 ersichtlich ist.

Weiterhin zeigt die Zusammenschau der Figuren 1 und 8, daß zumindest zwischen jeweils zwei Preßkammern (1a, 1b usw.) jeweils zwei Preßwände (2a, 3a; 2b, 3b usw.) im parallelen Abstand mit je einem Zylindermantel (19a, 19b usw.) zu einem den Druck der Preßhydraulik (29) von Preßkammer (1a) zu Preßkammer (1b usw.) übertragenden Stützring (20a, 20b usw.) verbunden sind.

Die Presse (10) weist zwei Endstücke (31a, 31b) auf; am Endstück (31b) ist die Preßhydraulik (29) angeordnet. Die Kraftübertragung zwischen den Endstücken (31a, 31b) erfolgt über die Zuganker (72). Jeder Preßkammer (1a, 1b usw.) ist ein relativ zu ihr axial verschiebbarer Kammerring (5a, 5b usw.) mit Antriebs- und Führungsmitteln von einer die Preßkammern (1) verschließenden Position zu einer die Preßkammern (1) öffnenden Position, und umgekehrt, angeordnet. Jeder Preßkammer (1a, 1b usw.) bzw. deren Kammerring (5a, 5b usw.) ist eine Einfüllöffnung (9a, 9b usw.) mit Mitteln zum Öffnen und Verschließen sowie eine Beschickungseinrichtung (100) zugeordnet.

Erfindungswesentlich weist die Beschickungseinrichtung (100) eine der Anzahl der Preßkammern (1a, 1b usw.) entsprechende Anzahl von Chargierbehältern (15a, 15b) auf, wobei jeder Preßkammer (1a, 1b usw.) ein separater Chargierbehälter (15a, 15b usw.) zugeordnet ist.

Mit Vorteil weist dabei jeder Chargierbehälter (15a, 15b) Mittel zur Dosierung und Zuteilung von jeweils einer dem Aufnahmevolumen der zugeordneten Preßkammer (1a, 1b usw.) entsprechenden Gutcharge auf.

Hierdurch wird mit Vorteil erreicht, daß in einer Arbeitsstellung der Vorrichtung (10) gemäß Fig. 1 und 8, wobei die Preßkammern (1a, 1b usw.) nach Ausstoß der ausgepreßten Preßkuchen durch ihre Kammerringe (5a, 5b usw.) wieder verschlossen und bei geöffneten Einfüllöffnungen (8) zur Aufgabe jeweils einer Charge bereit sind, sämtliche Kammern (1a bis 1d usw.) gleichzeitig mit einer exakt vordosierten Charge in kürzester Zeit gefüllt werden.

Dadurch werden bei optimalem Entwässerungsergebnis äußerst schnelle Taktfolgen im Zyklus -"Beschickung", - "Flüssigkeit auspressen" - "Preßling ausstoßen" - erreicht.

Den Chargierbehältern (15) ist dabei zumindest eine Zuteileinrichtung vorzugsweise mit einem Transportband (38) und einer verfahrbaren Abwurfschurre (61) zugeordnet. An dieser Abwurf schurre ist zur Überprüfung des Materialpegels in dem jeweils zur Materialaufgabe anstehenden Chargierbehälter (15) eine Einrichtung zur Pegelmessung, vorzugsweise ein Ultraschall-Pegelmesser (65), vorgesehen. Dieser Pegelmesser (65) ist vorzugsweise mit Mitteln zur Unterbrechung der Gutzuteilung zum Chargierbehälter (15) zusammenwirkend ausgebildet. Bei diesen Mitteln, die zeichnerisch nicht dargestellt sind, kann es sich bei- spielsweise um einen Schalter zur Unterbrechung des Antriebs für das Transportband (38) handeln.

Weiterhin ist jeder Chargierbehälter (15) zur gravimetrischen Dosierung seines Inhalts mit wenigstens einem Lastgeber (66) ausgerüstet.

Der Pegelmesser (65) einerseits und der Lastgeber (66) des gerade zu befüllenden Chargierbehälters (15) andererseits wirken zur Kontrolle einer exakt zu bemessenden Gutcharge zusammen, wobei der Pegelmesser (65) ein volumetrisches Signal und der Lastgeber (66) ein gravimetrisches Signal auslöst. Dabei kann eine Sicherheitsschaltung in dem Sinne vorgesehen sein, daß nur bei Übereinstimmung der jeweiligen Soll-Werte beider Signale die Chargierung der entsprechenden Preßkammer (1) eingeleitet wird. Somit ist durch diese Kontrollfunktion der beiden Signalgeber (65) und (66) sichergestellt, daß eine fehlerhafte Chargierung einer Preßkammer (1) unter allen Umständen verhindert wird.

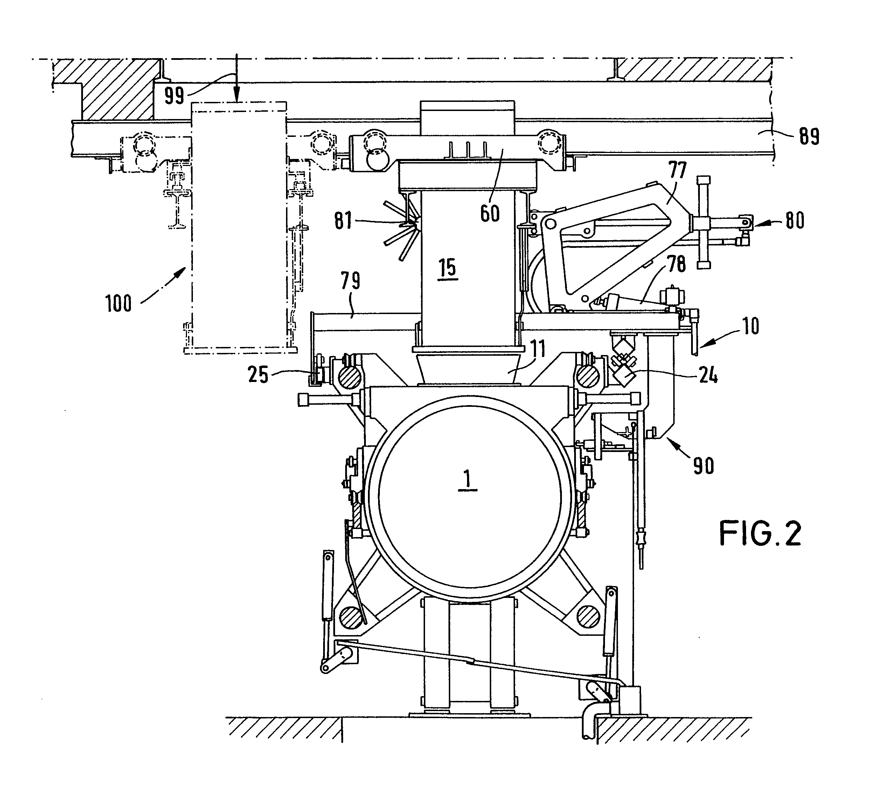

Wie aus der Zusammenschau der Figuren 1 und 2 ersichtlich ist, sind die Chargierbehälter (15a, 15b usw.) gemeinsam auf einem Rahmengestell (60) angeordnet. Dieses ist mit Fahrmitteln (58) versehen von einer Position oberhalb der Presse (10) zu einer Seitenposition neben derselben auf einem Paar oberhalb der Presse (10) und zu dieser quer verlaufenden Schienen bzw. Trägern (89) verfahrbar ausgebildet. In der Fig. 2 ist die Position oberhalb der Presse (10) mit ausgezogenen Linien und die Position neben derselben mit gestrichelten Linien gezeigt.

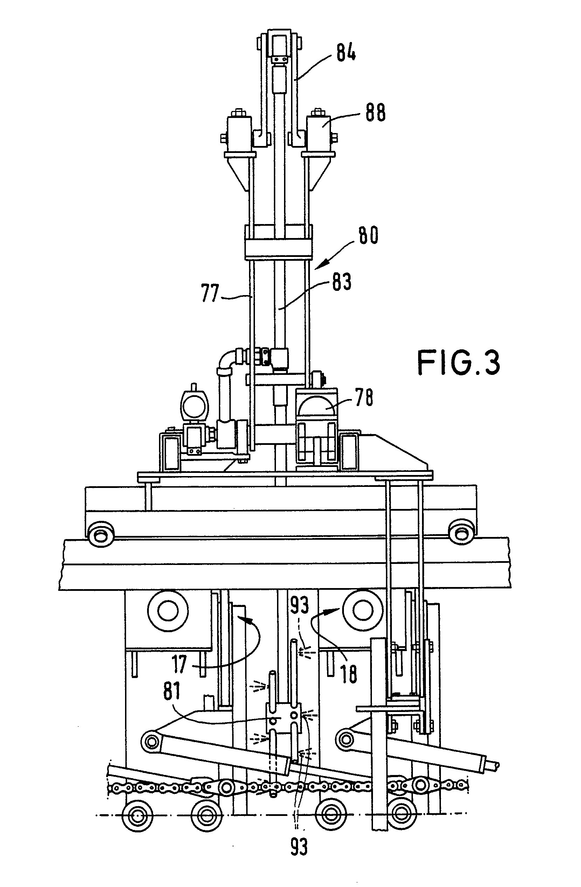

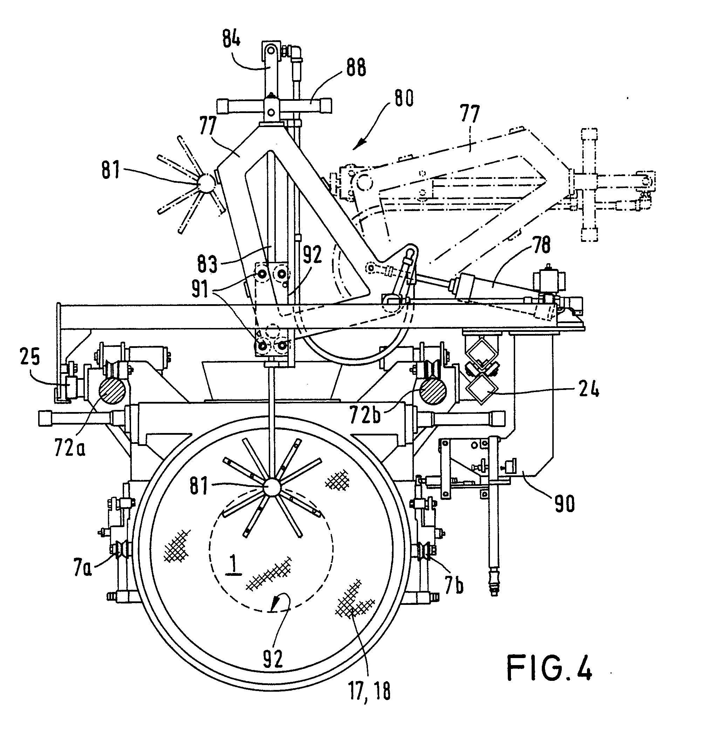

Diese Anordnung dient vorteilhaft dazu, um beim periodisch durchführbaren Abreinigungsvorgang mit der Wascheinrichtung (80) diese, nachdem die Beschickungseinrichtung (100) in die Position neben der Presse (10) verfahren wurde, in ihre Arbeitsstellung hochzuschwenken und damit die geöffneten Preßkammern (1a, 1b usw.) mittels Hochdruck-Wassersprühstrahlen abzureinigen, wie dies in den Figuren 3 und 4 dargestellt ist.

Vorteilhaft kann hierbei gemäß schematischer Darstellung in der Fig. 2, die zur Seite gefahrene Beschickungseinrichtung (100) in dieser "Wartestellung" während des Zeitraumes der Abreinigung der Kammern (1a, 1b usw.) durch die Wascheinrichtung (80) bereits wieder durch die Zuteileinrichtung mit Gut beschickt werden, wie dies durch den Pfeil (99) in der Fig. 2 rein schematisch angedeutet ist.

Die Verfahrbarkeit der Beschickungseinrichtung (100) gegenüber der Presse (10) bietet auf diese Weise eine Möglichkeit zur ungestörten periodischen Abreinigung der einzelnen Preßkammern (1) und vermeidet zugleich die Entstehung größerer Totzeiten zwischen den Arbeits-Taktfolgen der Vorrichtung. Damit wird eine sehr wirtschaftliche Betriebsweise der Presse (10) erreicht.

Dabei beträgt die Gesamtzeit für einen Zyklus beispielsweise - je nach Beschaffenheit des auszupressenden Gutes - zwischen 120 und 180 sec. Hierin enthalten ist eine Totzeit von ca. 44 bis 50 sec. Diese wird benötigt für die nachfolgend aufgezählten Arbeitsschritte zwischen jeweils zwei einander folgenden Preßvorgängen, und zwar

- Druckabbau der Preßhydraulik (29)
- Öffnen der Presse (100);
- Öffnen der Kammerringe (5) und damit aller Preßkammern (1);
- Ausstoßen der Preßlinge;
- Schließen der Kammerringe (5) und damit aller Preßkammern (1);
- Chargieren der Preßkammern (1) und Schließen der Füllöffnungen (8, 9).

Für den Preßvorgang stehen sowie ca. 76 bis 130 sec. zur Verfügung.

Die zur Abreinigung der Filterflächen (17) der Preßkammern (1) vorgesehene Wascheinrichtung (80) ist auf einem seitlichen neben und oberhalb der Preßkammern (1) längsverfahrbaren Waschwagen (79) angeordnet. Zu diesem Zweck weist die Presse (10) in ihrem oberen Bereich je eine Fahrschiene (24, 25) auf, auf welcher der Waschwagen (79) mittels Rollen verfahrbar geführt ist. Dieser kann beispielsweise von Hand geführt sein und weist zur exakten Einnahme jeweils einer Arbeitsstellung gegenüber einer abzureinigenden Preßkammer (1) Mittel (90) zur Verriegelung auf.

In der Fig. 3 ist eine Seitenansicht der Wascheinrichtung (80) dargestellt. Diese weist einen mit einem Schwenkantrieb (78) ausgebildeten Schwenkrahmen (77) sowie den Sprühkopf (81) auf.

Die unterschiedlichen Schwenkstellungen des Schwenkrahmens (77) sind weiterhin aus der Fig. 4 ersichtlich, welche die Wascheinrichtung (80) in Frontansicht zeigt.

Nach dem Aufrichten des Schwenkrahmens (77) ragt der Sprühkopf (81), der am Ende eines längs- und schwenkbeweglich geführten Sprührohres (83) angeordnet ist, in das Innere der geöffneten Preßkammer (1) hinein. dieses Sprührohr (83) wirkt an seinem dem Sprühkopf (81) entgegengesetzten Ende mit einer Kurbelschleife (84) mit Drehantrieb (88) zusammen. Die Führung des Sprührohres (83) besteht aus vier Führungsrollen (91), welche an einem schwenkbaren Schuh (92) angelenkt sind. Sobald nun die Kurbelschleife (84) durch den Drehantrieb (88) in Drehbewegung versetzt wird, beschreibt der Sprühkopf (81) innerhalb der Preßkammer (1) zwischen den abzureinigenden Filterflächen (17, 18) eine Kurvenbahn (92). Diese Kurvenbahn weicht geringfügig von der Kreisform ab und kann als sogenannte "Herzkurve" bezeichnet werden. Mit Hilfe der nach beiden Seiten vom Sprühkopf (81) aus Sprühdrüsen mit hohem Druck austretenden Sprühstrahlen (93) werden dabei die Filterflächen (17, 18) schnell und gründlich abgereinigt, wie dies die Fig. 3 zeigt.

Eine weitere vorteilhafte Ausgestaltung der Vorrichtung besteht darin, daß die Stützringe (20) gemäß Darstellung in den Figuren 5a und 5b in seitlichen oberen Führungen (72a, 72b) an Rollen (71a, 71b) hängend verschiebbar geführt sind. Ihre Zylindermäntel (19) sind als Führungen für die Kammerringe (5) ausgebildet.

Weil die Stützringe (20) sehr hohe Preßkräfte von Preßkammer zu Preßkammer übertragen, sind sie im Inneren durch eine Versteifungskonstruktion (76) zwischen ihren äußeren Preßwänden (2, 3) abgestützt.

Die hängende Anordnung gemäß Fig. 5a ergibt den Vorteil einer sehr tiefen Schwerpunktslage und damit einer stabilen Führung, wobei sich die Stützringe (20) in den Führungsrollen (71a, 71b) auf den Führungen (72a, 72b) praktisch spielend leicht verschieben lassen. Die Führungsstangen (72a, 72b) sind gleichzeitig die Zuganker der Vorrichtung (10).

Die Ausbildung der Preßwände (2, 3) mit Filterflächen (17, 18) wurde bereits vorgängig beschrieben. In der Fig. 5a ist in der unteren rechten Hälfte die Filterstruktur (10) gezeigt, die sich aus einem unteren Drahtgeflecht, einem darüberliegenden Lochblech und einem die Fläche abschließenden Filtertuch zusammensetzt. Diese Zusammensetzung entspricht bekannten Anordnungen von Filterpressen. Sie schließt jedoch einen ähnlichen, anders gearteten Aufbau nicht aus.

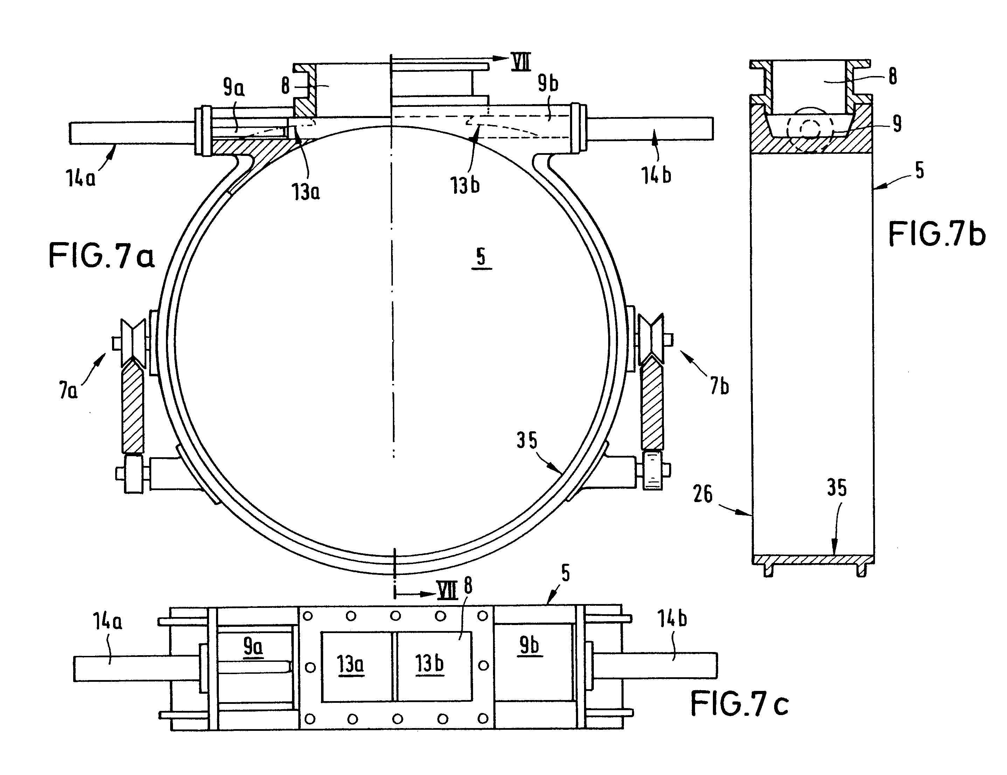

In den Figuren 7a bis 7c ist eine beispielhafte Ausführung eines Kammerringes (5) gezeigt. Aus der Darstellung geht unter anderem hervor, daß der Kammerring (5) auf Führungen (7a, 7b) in mittlerer Höhe der Presse (10) unter Gewichtsentlastung gegenüber den Stützringen (20) verschiebbar geführt ist. An der Oberseite des Kammerringes (5) befindet sich die Einfüllöffnung (8) in Form eines Einfüllstutzens. Dieser Einfüllöffnung (8) ist ein Verschlußorgan (9) zugeordnet. Es besteht aus den beiden linear bewegbaren Schiebern (13a, 13b), welche durch als Kolben/Zylinder-Einheiten ausgebildete Antriebselemente (14a, 14b) in die Verschlußstellung bewegt bzw. seitlich in die Öffnungsstellung zurückgezogen werden können, wie dies in der Fig. 7a mit gestrichelten Linien angedeutet ist. Dabei sind die Flachschieber (13a, 13b) gegen den Innenraum des Kammerringes (5) in Form von Kreissegmenten ausgebildet, so daß bei geschlossener Einfüllöffnung (8) die Kreisform der inneren Kammerringfläche des Mantelringes auch im Bereich der Einfüllöffnung gegeben ist. Die Innenwand (35) des Kammerringes (5) ist glatt, so daß bei dessen Verschiebung relativ zu dem festen Preßling des ausgepreßten Preßkuchens nur eine geringe Reibung zu überwinden ist. Diese Innenwand (35) ist im übrigen mit Rücksicht auf ihre Funktion zylinderförmig ausgebildet.

In der Fig. 6 ist eine weitere Ausgestaltung der Vorrichtung dargestellt. Diese besteht darin, daß an jedem Stützring (20a, 20b) eine Kolben/Zylinder-Einheit (6a, 6b usw.) angelenkt ist. Diese wirkt mit einem benachbarten Kammerring (5a, 5b), an welchem sie anderen Endes angelenkt ist, zusammen. Dabei ist die Anordnung so getroffen, daß bei zurückgefahrener Preßhydraulik (29) der Vorrichtung (10) und eingefahrener Kolben/Zylinder-Einheit (6), wie dies in der Fig. 6 dargestellt ist, die Preßkammern (1a, 1b) geschlossen und somit zum Chargiervorgang bzw. zum Preßvorgang bereit, und andererseits bei zurückgefahrener Preßhydraulik (29) der Vorrichtung (10) und ausgefahrener Kolben-Zylinder-Einheit (6a, 6b) die Preßkammern (1a, 1b usw.) zum Ausstoß des Preßkuchens und/oder zur Abreinigung der Filterflächen (17, 18) geöffnet sind.

Dabei sind zweckmäßig die Kolben/Zylinder-Einheiten (6) gemeinsam von einer (nicht dargestellten) hydraulischen Steuereinheit über Mengenregelventile ansteuerbar.

Hierdurch wird erreicht, daß alle Kolben Zylinder-Einheiten (6a, 6b usw.) bei entsprechendem hydraulischen Steuerimpuls zur gleichen Zeit und im gleichen Richtungssinn betätigbar sind.

Die in der Fig. 8 im Vertikalschnitt rein schematisch gezeigte Anordnung von vier Preßkammern (1a, 1b, 1c, 1d) weist - von links nach rechts gesehen - eine erste ringsum geöffnete Preßkammer (1a) auf. Jede der Preßkammern (1a bis 1d) weist ein Paar im Abstand parallele, in vertikalen Ebenen (y1-y1, y2-y2, y3-y3 usw.) verlaufende sowie in horizontaler Richtung verschiebbare Preßwände (2a, 3a; 2b, 3b; 2c, 3c; 2d, 3d) auf.

Die Preßwände (2) bzw. (3) sind relativ zueinander mit veränderlichem Abstand (A) antreibbar und begrenzen zwischen sich jeweils einen vertikalen Preßspalt (4a, 4b, 4c, 4d).

Bei dieser Anordnung sind jeweils zwei Preßwände (17, 18) jeweils in gleichen, parallelen Abständen mit einem Zylindermantel (19) zu einem den Druck von Preßkammer zu Preßkammer übertragenden Stützring (20) verbunden und im Inneren mit einer Versteifungskonstruktion (76) ausgesteift, wie dies im einzelnen aus den Figuren 5a, 5b hervorgeht.

Wie die schematische Darstellung der Fig. 8 weiter erkennen läßt, ist jeder Preßkammer (1a, 1b usw.) ein relativ zu und auf dieser axialverschiebbarer Kammerring (5a, 5b, 5c, 5d) zugeordnet. Dieser weist gemäß Fig. 1 bzw. Fig. 7a Antriebs- und Führungsmittel (6 bzw. 7) zur taktweisen Verschiebung von einer jeweils einen Preßspalt (4a bzw. 4d) überbrückenden und die Preßkammer (1a bis 1d) nach außen umschließenden ersten Axialposition zu einer die Preßspalte (4a bis 4d) freigebenden und die Preßkammern (1a bis 1d) öffnenden zweiten Axialposition auf (Fig. 8).

Die Fig. 8 zeigt von links nach rechts eine vollständig geöffnete Preßkammer (1a). Bei dieser ist der Kammerring (5a) bis zum Anschlag nach rechts verschoben und gibt die Preßwände (2a) und (3a) ringsum vollständig frei. Die rechts benachbarte Preßkammer (1b) ist durch den Kammerring (5b) ringsum vollständig geschlossen. Damit ist auch der Preßspalt (4b) nach außen druckdicht umschlossen. In der gezeigten Darstellung ist die Einfüllöffnung (8) mit einem schematisch angedeuteten Verschlußorgan (9) verschlossen. Zur Ausgestaltung des Kammerringes ′ mit Einfüllöffnung (8) und Verschlußorgan (9 b...·. 13, 14) wird im übrigen auf die Zeichnungen 7a, 7b, 7c verwiesen.

Die weiter rechts angeordneten und mit 1c bzw. 1d bezeichneten Preßkammern sind in einer Position gezeigt, die dem vollendeten Preßvorgang vor dem Öffnen der Kammern (1) und Austragen des Preßkuchens entspricht. Dabei ist die Spaltbreite (A3 bzw. A4) gegenüber der Spaltbreite (A1) der geöffneten Kammer (1a) bzw. (A2) der noch nicht zusammengepreßten Kammer (1b) etwa auf 30 % der ursprünglichen Spaltbreite reduziert und damit die in den Preßkammern (1c) und (1d) befindliche Gutcharge im Volumen reduziert und weitgehend entwässert.

Die Stützringe (20a, 20b usw.) sind an ihren Stirnseiten und an der Peripherie mit Ringdichtungen (23) zur Abdichtung gegenüber den Kammerringen (5a, 5b usw.) versehen.

Die Führungsarme (75), an welchen die Stützringe (20a, 20b usw.) gemäß Darstellung in den Figuren 5a und 5b hängend angeordnet sind, sind in der schematischen Darstellung der Fig. 8 mit den Bezugszeichen (75a bis 75d) rudimentär angedeutet.

## Ansprüche

1. Vorrichtung zum Auspressen von Flüssigkeit aus schütt- und/oder rieselfähigem Gut mit einer Anzahl in Reihe horizontal angeordneter und zwischen vertikalen Preßwänden ausgebildeter Preßkammern, wobei jeder Preßkammer ein relativ zu ihr axial verschiebbarer Kammerring zugeordnet und mit Antriebs- und Führungsmitteln von einer die Preßkammer verschließenden Position zu einer die Preßkammer öffnenden Position und umgekehrt verschiebbar ist und jeder Preßkammer bzw. deren Kammerring eine Einfüllöffnung mit Mitteln zum Öffnen und Verschließen sowie eine Beschickungseinrichtung zugeordnet ist und zumindest zwischen jeweils zwei Preßkammern jeweils zwei Preßwände im parallelen Abstand mit einem Zylindermantel zu einem den Druck von Preßkammer zu Preßkammer übertragenden Stützring verbunden sind, dadurch gekennzeichnet, daß die Beschickungseinrichtung (100) eine der Anzahl der Preßkammern (1) entsprechende Anzahl von Chargierbehältern (15) aufweist, wobei jeder Preßkammer (1) ein separater Chargierbehälter (15) zugeordnet ist, und jeder Chargierbehälter (15) Mittel zur Dosierung und Zuteilung von jeweils einer dem Aufnahmevolumen der zugeordneten Preßkammer (1) entsprechenden Gutcharge aufweist.

2. Vorrichtung nach Anspruch 1, dadurch gekennzeichnet, daß den Chargierbehältern (15) eine Zuteileinrichtung vorzugsweise mit einem Transportband (38) und einer verfahrbaren Abwurfschurre (61) zugeordnet ist und diese zur Überprüfung des Materialpegels in dem jeweils zur Materialaufgabe anstehenden Chargierbehälter (15) eine Einrichtung wie Ultraschall-Pegelmesser (65) aufweist, welche Einrichtung mit Mitteln zur Unterbrechung der Gutzuteilung zum Chargierbehälter (15) zusammenwirkend ausgebildet ist.

3. Vorrichtung nach den Ansprüchen 1 und 2, dadurch gekennzeichnet, daß jeder Chargierbehälter (15) zur gravimetrischen Dosierung seines Inhalts mit wenigstens einem Lastgeber (66) ausgerüstet ist.

4. Vorrichtung nach Anspruch 1, dadurch gekennzeichnet, daß die Chargierbehälter (15) gemeinsam auf einem Rahmengestell (60) angeordnet sind und das Rahmengestell (60) mit Fahrmitteln (58) versehen von einer Position oberhalb der Presse (10) zu einer Seitenposition neben derselben auf einem Paar oberhalb der Presse (10) und zu dieser quer verlaufenden Schienen bzw. Trägern (89) verfahrbar ausgebildet ist.

5. Vorrichtung nach Anspruch 1, wobei diese eine Wascheinrichtung (80) zur Abreinigung der Filterflächen (17) der Preßkammern (1) aufweist, dadurch gekennzeichnet, daß die Wascheinrichtung (80) auf einem seitlich neben und oberhalb der Preßkammern (1) längsverfahrbaren Waschwagen (79) angeordnet ist und der Waschwagen (79) Mittel (90) zur Verriegelung jeweils neben einer der Preßkammern (1) aufweist.

6. Vorrichtung nach Anspruch 5, dadurch gekennzeichnet, daß die Wascheinrichtung (80) einen mit einem Schwenkantrieb (78) ausgebildeten Schwenkrahmen (77) mit einem Sprühkopf (81) aufweist.

7. Vorrichtung nach Anspruch 5 und 6, dadurch gekennzeichnet, daß der Sprühkopf (81) am Ende eines längs- und schwenkbeweglich geführten Sprührohres (83) angeordnet ist, welches an seinem dem Sprühkopf (81) entgegengesetzten Ende mit einer Kurbelschleife (84) mit Drehantrieb (88) zusammenwirkt.

8. Vorrichtung nach einem der Ansprüche 1 bis 7, dadurch gekennzeichnet, daß die Stützringe (20) in seitlichen oberen Führungen (72a, 72b) der Presse (10) an Rollen (71a, 71b) hängend verschiebbar geführt und deren Zylindermäntel (19) als Führungen für die Kammerringe (5) ausgebildet sind.

9. Vorrichtung nach einem der Ansprüche 1 bis 8, dadurch gekennzeichnet, daß die Kammerringe (5) auf Führungen (78a, 7b) in mittlerer Höhe der Presse (10) unter Gewichtsentlastung gegenüber den Stützringen (20) verschiebbar geführt sind.

10. Vorrichtung nach einem der Ansprüche 1 bis 9, dadurch gekennzeichnet, daß an jedem Stützring (20) eine Kolben/Zylinder-Einheit (6) angelenkt ist und diese mit einem benachbarten Kammerring (5), an welchem sie anderenendes ebenfalls angelenkt ist, zusammenwirkt, wobei die Anordnung so getroffen ist, daß bei zurückgefahrener Preßhydraulik (29) und eingefahrener Kolben/Zylinder-Einheit (6) die Preßkammern (1) geschlossen und somit zum Chargiervorgang bzw. zum Preßvorgang bereit, und andererseits bei zurückgefahrener Preßhydraulik (29) und ausgefahrener Kolben/Zylinder-Einheit (6) die Preßkammern (1) zum Ausstoß des Preßkuchens und/oder zur Abreinigung der Filterflächen (17, 18) geöffnet sind.

11. Vorrichtung nach den Ansprüchen 9 und 10, dadurch gekennzeichnet, daß die Kolben/Zylinder-Einheiten (6a bis 6g)) gemeinsam von einer hydraulischen Steuereinheit über Mengenregelventile ansteuerbar sind.

12. Vorrichtung nach einem der Ansprüche 1 bis 11, wobei jeder Kammerring (5) eine Füllöffnung (8) zur Materialaufgabe in die zugeordnete Preßkammer (1) mit Mitteln zum Öffnen und Schließen der Füllöffnung (8) aufweist, dadurch gekennzeichnet, daß diese Mittels als Doppelschieber (13a, 13b) mit Linearantrieben (14a, 14b) ausgebildet sind.

13. Vorrichtung nach einem der Ansprüche 1 bis 12, dadurch gekennzeichnet, daß jeder Chargierbehälter (15) als unteres Auslaßorgan einen Muschelschieber (11) aufweist und diese mit einem sie gemeinsam verbindenden Betätigungsgestänge (12) und mit einem damit zusammenwirkenden Antriebsorgan (16) ausgebildet sind.

FIG.1

H 88 /27

FIG.2

EP 0 318 732 A2

FIG.3

H 88/27

FIG.4

71a                                                                              71b

72a          75a              20              19              75b              72b

23

76                                                                             20

FIG.5a

17

34

72a   23   17a   2                                              72b

71a              75a         19         75b         71b

23   17b   3   20

FIG.5b

H 88 / 27

# FIG.6

FIG.7a

FIG.7b

FIG.7c

FIG.8

H88/27